Europäisches Patentamt

European Patent Office

Office européen des brevets

(19)

(11) Veröffentlichungsnummer : **0 317 867 B1**

## (12) EUROPÄISCHE PATENTSCHRIFT

(45) Veröffentlichungstag der Patentschrift :
23.10.91 Patentblatt 91/43

(51) Int. Cl.⁵ : **F16J 15/54**

(21) Anmeldenummer : **88118979.9**

(22) Anmeldetag : **14.11.88**

(54) **Labyrinthdichtungsanordnung.**

(30) Priorität : 25.11.87 DE 8715621 U

(43) Veröffentlichungstag der Anmeldung :
**31.05.89 Patentblatt 89/22**

(45) Bekanntmachung des Hinweises auf die
Patenterteilung :
**23.10.91 Patentblatt 91/43**

(84) Benannte Vertragsstaaten :
**AT CH DE FR LI SE**

(56) Entgegenhaltungen :
**EP-A- 0 217 134**
**GB-A- 2 081 819**
**GB-A- 2 082 271**

(73) Patentinhaber : **SIEMENS**
**AKTIENGESELLSCHAFT**
**Wittelsbacherplatz 2**
**W-8000 München 2 (DE)**

(72) Erfinder : **Scharstein, Egbert**
**Mettlacher Strasse 5a**
**W-8500 Nürnberg (DE)**

EP 0 317 867 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine Labyrinthdichtungsanordnung nach dem Oberbegriff des Anspruchs 1.

Durch die EP-A-0217134 ist ein Wellenabdichtsystem bekannt, das aus der Kombination einer Labyrinthdichtung und einer Lippendichtung besteht. Die Labyrinthdichtung ist dabei auf der mit Gas und Flüssigkeit beaufschlagten Innenseite eines Kurbelwellengehäuses und die nachgeschaltete Lippendichtung auf der der Atmosphäre zugewandten Seite des Kurbelwellengehäuses angeordnet. Bei diesem Dichtsystem liegen sowohl die Ein- als auch Austrittsöffnung der Labyrinthdichtung innerhalb des Kurbelwellengehäuses. Damit liegt auch ein zwischen den beiden Dichtungen vorgesehener Rückführkanal mit seinem Ein- und Auslaß innerhalb des Kurbelwellengehäuses.

Bei Labyrinthdichtungsanordnungen, die zum Abdichten einer von einem mit Flüssigkeitsdunst erfüllten Gehäuseraum nach außen führenden Welle dienen, erstreckt sich der Rückführkanal zwischen dem Gehäuseinneren und der Atmosphäre. Damit kann über den Rückführungskanal Flüssigkeitsdunst vom Gehäuseinneren z.B. in die Atmosphäre oder ins Innere einer benachbarten Maschine gelangen, deren Welle in das Gehäuse ragt.

Labyrinthdichtungsanordnungen werden insbes. zur Abdichtung von mit hoher Drehzahl rotierenden Wellen verwendet, die über möglichst lange Betriebszeiten wartungsfrei den Anforderungen gerecht werden müssen, möglichst wenig Flüssigkeit in Form von Flüssigkeitsdunst aus dem Gehäuse austreten zu lassen.

Solche Labyrinthdichtungsanordnungen werden vorzugsweise bei über Getriebe von Elektromotoren angetriebenen Fahrzeugen vorgesehen und dienen zur Abdichtung des Inneren des Motorgehäuses gegen einen mit diesem fest verbundenen geschlossenen Getriebekasten, der vom Dunst des Schmieröls für das Getriebe erfüllt ist. Die Qualität einer Labyrinthdichtungsanordnung bestimmt die Menge der aus dem Gehäuse unerwünschterweise herausdringenden dunstförmigen Flüssigkeit.

Der Erfindung liegt die Aufgabe zugrunde, mit einfachen Mitteln eine wesentliche Verbesserung solcher Labyrinthdichtungsanordnungen zu erreichen.

Die Lösung der gestellten Aufgabe gelingt durch die kennzeichnenden Merkmale des Anspruchs 1.

Vorteilhafte Ausgestaltungen der Erfindung sind Gegenstand von Unteransprüchen.

Die Erfindung ist nachfolgend anhand der Zeichnung für zwei Ausführungsbeispiele näher erläutert. Es zeigen:

FIG 1    einen Teillängsschnitt durch einen Elektromotor mit endseitig angeordnetem Antriebsritzel,

FIG 2    einen Teillängsschnitt eines mit einem Getriebezahnrad verbundenen Wellenabschnitts, der einen Getriebekasten abdichtet, durchdringt, und an diesem gelagert ist.

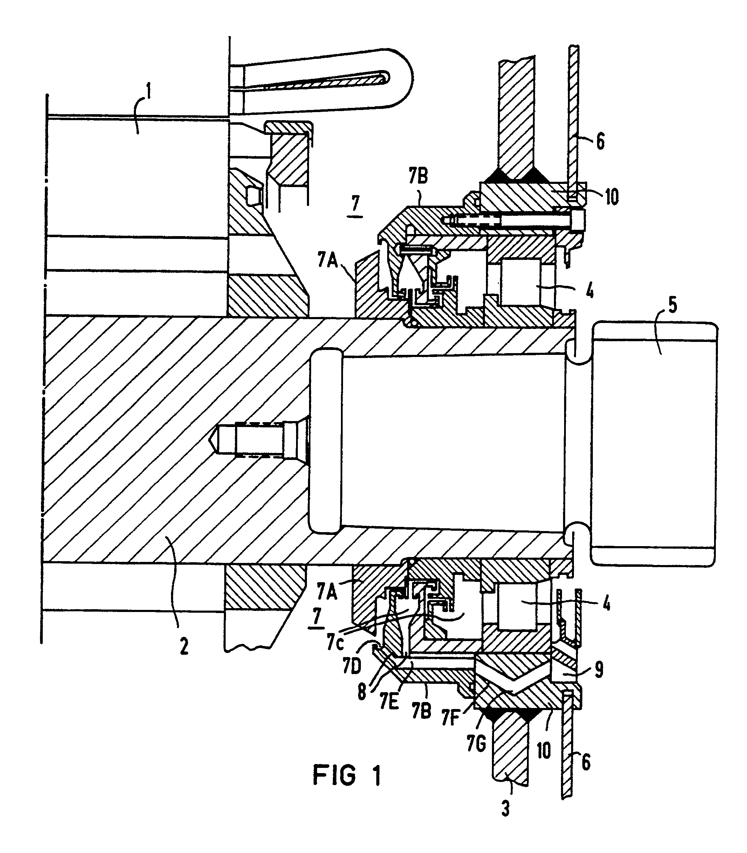

Das antriebsseitige Ende der Welle 2 des Läufers 1 eines elektrischen Antriebsmotors ist über ein ölgeschmiertes Wellenlager 4 im Lagerschild 3 gelagert und durch eine Labyrinthdichtungsanordnung 7 innerhalb des Motors gemäß FIG 1 gegen einen nur mit seinem Wandteil 6 dargestellten geschlossenen Getriebekasten abgedichtet, in dem ein mit dem Wellenende verbundenes Antriebsritzel 5 eines nicht dargestellten ölgeschmierten Getriebes untergebracht ist. Das Innere des Getriebekastens ist von Öldunst erfüllt.

Die Labyrinthdichtungsanordnung 7 besteht aus einem mit der Welle 2 verbundenen rotierenden Teil 7A mit mehreren Abspritzringkanten sowie einem mit dem Lagerschild 3 verbundenen ruhenden Teil 7B mit Ringvorsprüngen zur Bildung von Engstellen mit dem rotierenden Teil 7A, wobei im ruhenden Teil 7B ringnutförmige Labyrinthkammern 7C sowie eine Auffangrinne 7D zum Sammeln von abgeschleuderten Ölmengen vorgesehen sind, die auf der Unterseite Verbindungskanäle zu mindestens einem Ölrücklaufkanal 7E im ruhenden Teil 7B aufweisen. Der Ölrücklaufkanal 7E durchdringt noch einen mit dem Lagerschild 3 verbundenen ringförmigen Abstützkörper 10 für das Wellenlager 4 und mündet in den Getriebekasten. Der Einlaß 8 des Ölrücklaufkanals 7E liegt wie bekannt höher als dessen Auslaß 9, so daß abgeschleudertes Öl von den Labyrinthkammern 7C in den Ölrücklaufkanal 7E und durch diesen in den Getriebekasten zurückgelangen kann. Der Querschnitt des Ölrücklaufkanals wäre dabei für den direkten Durchtritt von Öldunst aus dem Getriebekasten zur letzten Labyrinthkammer 7C bzw. der Auffangrinne 7D durchlässig und es könnte unerwünschterweise unter Umgehung der Labyrinthdichtung Öl in das Motorinnere gelangen, wenn nicht gemäß der Erfindung der Ölrücklaufkanal 7E einen von den Druckverhältnissen beiderseits der Labyrinthdichtung unabhängig entleerungssicheren Ölsammelabschnitt 7F enthalten würde. Der besagte Ölsammelabschnitt 7F ist im Abstützkörper 10 angeordnet und so ausgebildet, daß er eine Knickstelle 7G aufweist, die betriebsmäßig ständig mit angesammeltem Öl gefüllt bleibt, das eine Sperre für das Ausströmen von Öldunst aus dem Getriebekasten in das Maschineninnere bildet.

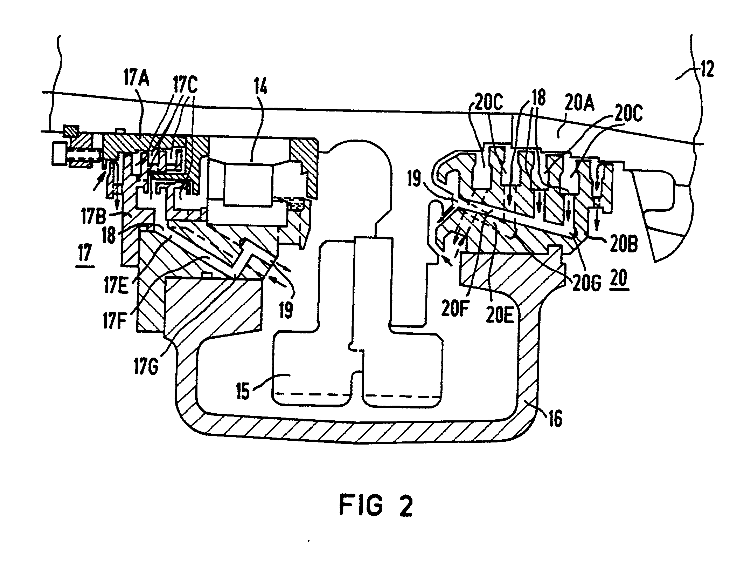

Bei dem Ausführungsbeispiel nach FIG 2 durchdringt die mit einem Getriebezahnrad 15 verbundene Welle 12 eines Antriebes für ein Fahrzeug einen nur teilweise gezeigten Getriebekasten 16 und ist gegen diesen auf der Seite eines Wellenlagers 14 durch eine Labyrinthdichtungsanordnung 17 auf der lagerfreien Seite durch eine Labyrinthdichtungsanordnung 20 abgedichtet, von denen jede einen rotierenden Teil 17A, 20A mit Abspritzringkanten sowie einem ruhenden Teil 17B, 20B mit ringförmigen Labyrinthkammern 17C, 20C aufweist, von denen zumindest die endseitigen mit Ölrücklaufkanälen 17E, 20E mit Ölsammelabschnitten 17F, 20F ausgestattet sind, die unterhalb der Einlässe 18 und der Auslässe 19 als Knickstellen 17G, 20G ausgebildet sind. Dabei können mehr als eine Labyrinthkammer 20C mit einem solchen Rücklaufkanal 20E verbunden sein. Die übrigen Teile der Labyrinthdichtungsanordnung 17 sind in üblicher Weise ausgebildet und mit dem Wellenlager in Funktionszusammenhang gebracht.

Die Knickstellen können auch als gebogene Umlenkstellen ausgebildet sein.

Die für Getriebekästenabdichtungen beschriebene Erfindung kann auch für die Abdichtung anderer flüssigkeitsdunstgefüllter geschlossener Räume gegen in sie einseitig ragende oder in durchdringende rotierende Teile nach außen oder in benachbarte geschlossene Räume mit gleichem Vorteil verwendet werden, d.h. für alle Labyrinthdichtungseinrichtungen mit Flüssigkeitsrücklaufkanälen.

## Patentansprüche

1. Labyrinthdichtungsanordnung mit wenigstens zwei rotierenden Abspritzringkanten und wenigstens einer diesen zugeordneten ruhenden Labyrinthkammer (7C ; 17C ; 20C) sowie mindestens einem Flüssigkeitsrücklaufkanal (7E ; 17E ; 20E) zwischen wenigstens der dem letzten Labyrinthdichtspalt zugeordneten Labyrinthkammer (7C ; 17C, 20C) und dem Innenraum einer nach außen abgeschlossen, von Flüssigkeitsdunst erfüllten ruhenden Gehäuseanordnung (6 ; 16) und einer sie berührungslos durchdringenden rotierenden Welle (2, 12), **dadurch gekennzeichnet**, daß jeder Flüssigkeitsrücklaufkanal (7E, 17E, 20E) einen unabhängig von wechselnden Druckverhältnissen beiderseits der Labyrinthdichtung (7, 17, 20) ständig mit Flüssigkeit gefüllten, siphonartigen Flüssigkeitssammelabschnitt (7F, 17F, 20F) aufweist, so daß durch die Flüssigkeit der Flüssigkeitsrücklaufkanal (7E, 17E, 20E) nach beiden Seiten dunstdicht abgesperrt ist.

2. Anordnung nach Anspruch 1, **dadurch gekennzeichnet**, daß der Sammelabschnitt als Knickstelle (7G, 17G, 20G) ausgebildet ist.

3. Anordnung nach Anspruch 1 oder 2, **dadurch gekennzeichnet**, daß der Rücklaufkanal mindestens zwei zueinander geneigte sammelstellenbildende Teile aufweist, von denen der eine direkt in mindestens eine Labyrinthkammer (7C, 17C, 20C), der andere direkt in den Innenraum des dunstgeführten Gehäuses (6, 16) mündet.

4. Anordnung nach Anspruch 3, **dadurch gekennzeichnet**, daß der mit dem Innenraum verbundene Teil sammelstellenbildend mit mehreren in verschiedene Labyrinthkammern mündende Teile verbunden ist. (FIG 2)

## Claims

1. A labyrinth seal arrangement with at least two rotating annular spray edges and, associated with these, at least one stationary labyrinth chamber (7C ; 17C ; 20C), and with at least one liquid return flow channel (7E ; 17E ; 20C) between at least the labyrinth chamber (7C ; 17C ; 20C) associated with the last labyrinth seal gap and the inner chamber of an outwardly sealed stationary housing arrangement (6 ; 16), filled with liquid vapour, and a rotating shaft (2, 12) penetrating this housing without contact, characterised in that each liquid return flow channel (7E, 17E, 20E) has a siphon-like liquid collecting section (7F, 17F, 20F), filled constantly with liquid and independently of alternating pressure ratios on both sides of the labyrinth seal (7, 17, 20), so that, as a result of the liquid, the liquid return flow channel (7E, 17E, 20E) is blocked at both sides in a vapour-sealed manner.

2. An arrangement according to claim 1, characterised in that the collecting section is formed as a kink (7G, 17G, 20G).

3. An arrangement according to claim 1 or 2, characterised in that the return flow channel has at least two parts forming collecting points and inclined relative to each other, one of which opens directly into at least one labyrinth chamber (7C, 17C, 20C) and the other directly into the inner chamber of the vapour-guided housing (6 ; 16)

4. An arrangement according to claim 3, characterised in that the part connected to the inner chamber forming collecting points is connected to several parts opening into various labyrinth chambers. (FIG 2).

## Revendications

1. Dispositif d'étanchéité à labyrinthe comportant au moins deux arêtes annulaires rotatives de projection et au moins une chambre à labyrinthe (7C ; 17C ; 20C) fixe, associée à ces arêtes, ainsi qu'au moins un canal de retour de liquide (7E ; 17E ; 20E) situé entre au moins la chambre à labyrinthe (7C ; 17C ; 20C) associée à la dernière fente d'étanchéité à labyrinthe et l'espace intérieur d'un dispositif fixe formant boîtier (6 ; 16), qui est fermé en direction de l'extérieur et est rempli par un brouillard de liquide, et un arbre rotatif (2, 12) traversant le dispositif formant carter, sans contact, caractérisé par le fait que chaque canal de retour de liquide (7E, 17E, 20E) possède une section (7F, 17F, 20F) de collecte du liquide en forme de syphon, qui est remplie en permanence par le liquide indépendamment de conditions variables de pression des deux côtés du joint d'étanchéité à labyrinthe (7, 17, 20), de sorte que le canal de retour de liquide (7E, 17E, 20E) est obturé des deux côtés, d'une manière étanche au brouillard, par le liquide.

2. Dispositif suivant la revendication 1, caractérisé par le fait que la section de collecte est réalisée avec une forme coudée (7G, 17G, 20G).

3. Dispositif suivant la revendication 1 ou 2, caractérisé par le fait que le canal de retour comporte au moins deux parties inclinées l'une par rapport à l'autre, qui forment la zone de collecte et dont l'une débouche directement dans au moins une chambre à labyrinthe (7C, 17C, 20C) et d'ont l'autre débouche directement dans l'espace intérieur du carter (6, 16) dans lequel le brouillard est guidé.

4. Dispositif suivant la revendication 3, caractérisé par le fait que la partie reliée à l'espace intérieur est raccordée, en formant une zone de collecte, à plusieurs parties qui débouchent dans différentes chambres à labyrinthe. (Figure 2).

FIG 1

FIG 2